# FASCICULE DE BREVET EUROPEEN

(11) **EP 3 466 681 B1**
(45) Date de publication et mention de la délivrance du brevet: **07.08.2019**
(21) Numéro de dépôt: 18198553.2
(22) Date de dépôt: 04.10.2018
(51) Int. Cl.: B32B 27/08, B32B 27/34, B32B 7/02, B32B 1/08, B32B 7/12, F16L 11/04, B32B 27/18, B32B 27/22, B32B 27/30

(54) **MATÉRIAU MULTICOUCHE AYANT UNE TENUE AU VIEILLISSEMENT ET À L'ÉCLATEMENT À CHAUD, POUR APPLICATIONS HAUTE TEMPÉRATURE DANS LE DOMAINE AUTOMOBILE**
MEHRSCHICHTMATERIAL, DAS BESTÄNDIG GEGEN ALTERUNG UND AUFSPLITTERUNG DURCH HITZE IST UND SICH FÜR HOCHTEMPERATUR-AUTOMOBILANWENDUNGEN EIGNET
MULTILAYER MATERIAL WITH RESISTANCE TO AGEING AND HOT BURST, FOR HIGH TEMPERATURE AUTOMOTIVE APPLICATIONS

(30) Priorité: 05.10.2017 FR 1759323
(43) Date de publication de la demande: 10.04.2019
(73) Titulaire: Arkema France, 92700 Colombes (FR)
(72) Inventeur: MONTANARI, Thibaut, 27300 MENNEVAL (FR); VERMOGEN, Alexandre, 69510 SOUCIEU EN JARREST (FR); BLONDEL, Philippe, 27300 BERNAY (FR)

(56) Documents cités:
- WO-A1-2017/121961
- WO-A1-2017/121962
- US-A1- 2010 307 625

## Description

L'invention porte sur une structure multicouche, en particulier sous forme de tube, et son utilisation pour transporter des fluides tels que de l'air, de l'huile, de l'eau, un liquide de refroidissement, ou un carburant tel que de l'essence ou du diesel, en particulier pour les véhicules à moteur.

L'invention porte plus particulièrement sur les tubes présents au sein d'un moteur. Ces tubes peuvent par exemple être destinés au transport de carburants, notamment entre le réservoir et le moteur, au circuit de refroidissement, au système hydraulique, au refroidisseur d'huile de transmission (TOC) ou encore destinés au circuit d'air conditionné ou le transport de mélange d'urée et d'eau.

Pour le transport des fluides des engins de transport il faut satisfaire de nombreux critères, en particulier de bonnes propriétés de flexibilité, de tenue au choc à froid, de tenue à l'éclatement notamment à chaud, de tenue au vieillissement à chaud, de point de fusion suffisamment élevée.

Les températures pour les applications automobiles ci-dessus définies ne cessent de monter ce qui implique d'avoir un point de fusion encore plus élevé de la composition constituant les couches du tube ainsi que, pour le tube multicouche, une tenue au vieillissement et à l'éclatement à chaud encore plus haute.

A l'heure actuelle, il existe deux types de tubes, des tubes monocouches et multicouches (MLT), c'est-à-dire constitués d'une ou plusieurs couches de polymère.

De manière classique, les tubes multicouches utilisés sont fabriqués par co-extrusion des différentes couches, selon les techniques habituelles de transformation des thermoplastiques.

Les compositions à base de polyamides (PA) aliphatiques, tout particulièrement ceux à nombre de carbones élevées (longue chaîne), présentent souvent de très bonnes performances en tenue au vieillissement, malheureusement le point de fusion est bas (typiquement inférieur à environ 200°C).

Au contraire les compositions à base de PA semi-aromatiques, aussi appelés polyphtalamides (PPA), qui sont typiquement des copolymères avec un motif dérivé de l'acide téréphtalique présentent ce caractère d'un point de fusion élevé (typiquement supérieur à environ 220°C). Ils ont aussi l'avantage d'être chimiquement plus résistant à chaud aux fluides tels que la bio-essence alcoolisée ou le liquide de refroidissement. Par contre, comparé aux PA aliphatiques longues-chaines (à motif à nombre de carbone élevé présentant un nombre moyen d'atomes de carbone par atome d'azote allant de 10 à 18) ils sont peu ductiles, peu performant en choc à froid, peu flexibles et peu performants en tenue au vieillissement.

De plus, les tubes recherchés doivent éviter les inconvénients suivants :
- si le tube est un tube multicouche, le délaminage des couches, notamment internes, notamment lors de l'insertion de raccord (ce qui peut conduire à des fuites) ;
- un gonflement excessif du tube après vieillissement dans les systèmes essence (y compris bioessence) et diesel (y compris pour les biodiesels), qui peut conduire à des fuites ou des problèmes de positionnement sous le véhicule.

Le brevet EP 2310438 décrit des copolyamides A/XT, notamment un 11/10T et des tubes extrudés à partir de cette composition.

Le brevet EP 2098580 décrit des tubes comprenant au moins deux couches de polyamides, plastifiées ou non, l'une étant une couche formée d'une composition adhésive, l'autre étant une couche barrière en EVOH ou une couche en polyamide présentant un nombre moyen d'atomes de carbone par atome d'azote noté C_{A} compris entre 4 et 8,5, avantageusement entre 4 et 7, ou au moins trois couches, une couche endurante formée d'une composition comprenant un polyamide noté C présentant un nombre moyen d'atomes de carbone par atome d'azote noté C_{C} compris entre 9 et 18, avantageusement entre 10 et 18.

La demande internationale WO 2017/121961 décrit des MLT destinées au transport de carburants, en particulier d'essence, notamment alcoolisée, comprenant de l'extérieur vers l'intérieur au moins une couche barrière (1) et au moins une couche intérieure (2) situé au-dessous de la couche barrière, la couche barrière (1) étant une couche en EVOH ou en-PPA, la couche intérieure (2) comprenant majoritairement au moins un polyamide de type aliphatique et contenant en moyenne de 0 à 1,5% en poids de plastifiant par rapport au poids total de la composition de la couche (2).

La demande internationale WO 2017/121962 décrit des MLT comprenant de l'intérieur vers l'extérieur au moins une couche intérieure barrière (1) en PPA et au moins une couche extérieure (2) situé au-dessus de la couche barrière contenant en moyenne de 0 à 5% de plastifiant par rapport au poids total de la composition de la couche (2) et comprenant majoritairement au moins un polyamide de type aliphatique.

Ces deux demandes internationales visent donc la diminution de l'extraction du plastifiant avec des essences alcoolisées par l'utilisation d'une proportion de plastifiant très faible.

Même si certains copolyamides semi-aromatiques présentent ce double avantage de point de fusion élevé associé à une bonne ductilité et à une bonne tenue au vieillissement, le problème qui reste à résoudre est que de nos jours et dans le futur, pour les applications à haute température, il faut de plus en plus souvent une troisième caractéristique haute température supplémentaire, celle d'une haute tenue à la pression d'éclatement, ce qui fait défaut aux polyphtalamides, en particulier à leurs compositions qui sont suffisamment ductiles, bonnes en chocs à froid et en vieillissement (car les propriétés demandées sont antagonistes et cela conduit à des compromis de propriétés pour les tube monocouche en polyphtalamide).

Par ailleurs, les structures décrites dans les brevets ou demande de brevet ci-dessus, ne présentent pas les trois propriétés à hautes températures ci-dessus définies.

La présente invention entend résoudre les problèmes ci-dessus définis par un agencement et une constitution particulière des couches de la structure multicouche et notamment par des copolyamides semi-aromatiques combinés avec une catégorie de polyamide très cristallin particulière, et sous forme de structure multicouche, en particulier de tube multicouche.

La présente invention concerne donc une structure tubulaire multicouche (MLT) destinée au transport de fluides tels que de l'air, de l'huile, de l'eau, une solution d'urée, un liquide de refroidissement à base de glycol, un refroidisseur d'huile de transmission (TOC), ou un liquide de climatisation, ou un carburant tel que de l'essence, en particulier de la bio-essence ou du diesel, en particulier bio-diesel, comprenant au moins une couche (1) et au moins une couche (2),
ladite couche (1) comprenant une composition comprenant :
- a) au moins 50% en poids d'au moins un polyamide semi-aromatique de formule W/ZT dans laquelle :
   - W est un motif répétitif aliphatique choisi parmi un motif obtenu à partir de la polycondensation d'au moins un acide aminocarboxylique en C₄-C₃₆, un motif obtenu à partir de la polycondensation d'au moins un lactame en C₄-C₃₆, et un motif répétitif X.Y aliphatique obtenu à partir de la polycondensation :
      - d'au moins une diamine X, ladite diamine étant choisie parmi une diamine aliphatique linéaire ou ramifiée ou un mélange de ceux-ci, et
      - d'au moins un diacide carboxylique Y, ledit diacide étant un diacide aliphatique,
         ladite diamine et ledit diacide comprenant de 4 à 36 atomes de carbone, avantageusement de 6 à 18 atomes de carbone, notamment de 9 à 18 atomes de carbone,
         la proportion molaire de W étant de 0,3 à 1,1 pour 1 mole de ZT, préférentiellement de 0,5 à 1 pour 1 mole de ZT,
   - ZT est un motif répétitif obtenu à partir de la polycondensation d'au moins une diamine aliphatique linéaire ou ramifiée (Z) comprenant de 9 à 18 atomes de carbone, avantageusement de 10 à 15 atomes de carbone, avec de l'acide téréphtalique (T),
- b) au moins 10% en poids, préférentiellement au moins 15% d'un modifiant choc,
- c) de 0 à 20% en poids d'au moins un plastifiant,
- d) de 0 à 40% en poids d'au moins un additif,
la somme a) +b) + c) + d) étant égale à 100%,
ladite couche (2) comprenant une composition comprenant
a') au moins 50% en poids d'au moins un polyamide semi-cristallin à courte chaîne noté (A) constitué d'au moins 70% de motifs aliphatiques et présentant un nombre moyen d'atomes de carbone par atome d'azote noté C_{A} allant de 4 à 9,5, avantageusement de 4 à 8, en particulier de 4 à 7, ledit polyamide aliphatique à courte chaîne (A) étant :
   - de formule X₁Y₁/Z₁, dans laquelle :
      - X₁Y₁ est un motif répétitif aliphatique obtenu à partir de la polycondensation d'au moins une diamine aliphatique X₁ linéaire ou ramifiée comprenant de 2 à 6 atomes de carbone, avantageusement de 4 à 6 atomes de carbone, en particulier comprenant 6 atomes de carbone avec au moins un diacide carboxylique aliphatique Y₁ comprenant de 2 à 12 atomes de carbone, avantageusement de 6 à 10 atomes de carbone,
      - Z₁ est au moins un motif répétitif polyamide optionnel, Z₁ pouvant être présent jusqu'à 30% en poids par rapport au poids total X₁Y₁/Z₁, préférentiellement jusqu'à 15% en poids par rapport au poids total X₁Y₁/Z₁, ou
   - de formule V/Z₁, V étant un motif répétitif obtenu à partir de la polycondensation d'au moins un lactame comprenant de 2 à 8 atomes de carbone, avantageusement de 4 à 6 atomes de carbone, en particulier 6 atomes de carbone ou d'au moins un acide aminocarboxylique comprenant de 2 à 8 atomes de carbone, avantageusement de 4 à 6 atomes de carbone, en particulier 6 atomes de carbone, Z₁ étant tel que défini ci-dessus en a'),
- b') de 0 à 15% d'au moins un modifiant choc,
- c') de 0 à 12% en poids d'au moins un plastifiant,
- d') de 0 à 40% en poids d'au moins un additif,
la somme a') + b') + c') + d') étant égale à 100%.

Les Inventeurs ont donc trouvés que la combinaison de copolyamides semi-aromatiques avec des polyamides semi-cristallins particuliers sous forme de structure tubulaire multicouche présentait l'avantage de posséder les trois propriétés, à savoir un point de fusion élevé, une haute tenue au vieillissement à haute température ainsi qu'une haute pression d'éclatement à haute température.
Par ailleurs, les structures tubulaires multicouches de l'Invention ne présentent plus les problèmes de HDT, fluage, tenue au raccord à chaud, thermoformabilité et rayon de croquage rencontrés avec les MLT de l'art antérieur.
L'expression « polyamide semi-cristallin à courte chaîne » désigne un polyamide présentant un nombre moyen d'atomes de carbone par atome d'azote allant de 4 à 9,5, avantageusement de 4 à 8, en particulier de 4 à 7.

Le terme « fluide » désigne un gaz utilisé dans l'automobile, en particulier un gaz tel que l'air ou un liquide, en particulier un liquide et notamment une huile, un liquide de frein, une solution d'urée, un liquide de refroidissement à base de glycol, un refroidisseur d'huile de transmission (TOC), ou un liquide de climatisation, ou un carburant tel que de l'essence, en particulier de la bio-essence ou du diesel, en particulier bio-diesel.
L'azote et l'oxygène sont exclus de la définition dudit gaz.
Avantageusement, le fluide est choisi parmi l'air, l'huile, un liquide de frein, une solution d'urée, un liquide de refroidissement à base de glycol, un refroidisseur d'huile de transmission (TOC), ou un liquide de climatisation, ou un carburant tel que de l'essence, en particulier de la bio-essence ou du diesel, en particulier bio-diesel.
La nomenclature utilisée pour définir les polyamides est décrite dans la norme ISO 1874-1:2011 "Plastiques -- Matériaux polyamides (PA) pour moulage et extrusion -- Partie 1: Désignation" et est bien connue de l'homme du métier.
Le terme « polyamide » selon l'invention désigne aussi bien un homopolyamide qu'un copolyamide.

### S'agissant de la couche (1)

Dans une première variante de l'invention, le motif répétitif aliphatique W est obtenu à partir de la polycondensation d'au moins un acide aminocarboxylique en C₄-C₃₆.

Avantageusement, ledit acide aminocarboxylique comprend de 9 à 12 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12), avantageusement l'acide aminocarboxylique est le l'acide 11-aminoundécanoïque.

Dans une deuxième variante de l'invention, le motif répétitif aliphatique W est obtenu à partir de la polycondensation d'au moins un lactame en C₄-C₃₆.

Avantageusement le lactame comprend de 9 à 12 atomes de carbone. Il peut ainsi être choisi parmi le décanolactame (noté 10), l'undécanolactame (noté 11) et le laurolactame ou lauryllactame (noté 12), avantageusement le lactame est le lauryllactame.

Toutefois, on peut tout à fait envisager de mettre en oeuvre, pour l'obtention de ce même motif W, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

De manière plus particulièrement préférée, le motif répétitif W est obtenu à partir d'un seul acide aminocarboxylique ou d'un seul lactame.

### W : motif répétitif X.Y

Le motif répétitif X.Y est un motif obtenu à partir de la polycondensation d'au moins une diamine aliphatique linéaire ou ramifiée X ou d'un mélange de celles-ci,
et d'au moins un diacide carboxylique aliphatique.

Les proportions molaires en diamine et en diacide carboxylique sont préférentiellement stoechiométriques.

La diamine aliphatique utilisée pour l'obtention de ce motif répétitif X.Y est une diamine aliphatique qui présente une chaine principale linéaire comprenant de 4 à 36 atomes de carbone.

Cette chaine principale linéaire peut, le cas échéant, comporter un ou plusieurs substituant(s) méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituants méthyle et/ou éthyle sur la chaine principale, la diamine aliphatique utilisée pour l'obtention de ce motif répétitif X.Y comprend de 4 à 36 atomes de carbones, avantageusement de 6 à 18 atomes de carbone, notamment de 9 à 18 atomes de carbone.

Lorsque cette diamine est une diamine aliphatique linéaire, elle répond alors à la formule H₂N-(CH₂)x-NH₂ et peut être choisie par exemple parmi la butanediamine, la pentanediamine, l'hexanediamine, l'heptanediamine, l'octanediamine, la nonanediamine, la décanediamine, l'undécanediamine, la dodécanediamine, la tridécanediamine, la tétradécanediamine, l'hexadécanediamine, l'octadécanediamine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine, la 2-méthyl-1,8-octanediamine ou la triméthylène (2,2,4 ou 2,4,4) hexanediamine.

Le diacide carboxylique comprend de 4 à 36 atomes de carbone, avantageusement de 6 à 18 atomes de carbone, notamment de 9 à 18 atomes de carbone.

Le diacide carboxylique aliphatique peut être choisi parmi les diacides carboxyliques aliphatiques, linéaires ou ramifiés

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Avantageusement, ladite couche (1) comprend une composition constituée d'au moins 50% en poids dudit au moins un polyamide semi-aromatique.

Avantageusement, ladite couche (1) comprend une composition constituée d'au moins 60% en poids dudit au moins un polyamide semi-aromatique.

Avantageusement, ladite couche (1) comprend une composition constituée d'au moins 70% en poids dudit au moins un polyamide semi-aromatique.

Avantageusement, ladite couche (1) comprend une composition constituée d'au moins 80% en poids d'un polyamide semi-aromatique.

Avantageusement, ladite couche (1) comprend une composition constituée d'au moins 90% en poids d'un polyamide semi-aromatique.

Avantageusement, ladite couche (1) comprend une composition constituée d'au moins 60% en poids d'un polyamide semi-aromatique.

Avantageusement, ladite couche (1) comprend une composition constituée d'au moins 70% en poids d'un polyamide semi-aromatique.

Avantageusement, ladite couche (1) comprend une composition constituée d'au moins 80% en poids d'un polyamide semi-aromatique.

Avantageusement, ladite couche (1) comprend une composition constituée d'au moins 90% en poids d'un polyamide semi-aromatique.

Elle peut de plus contenir jusqu'à 10% d'au moins un autre polyamide, notamment un polyamide aliphatique.

La structure tubulaire peut comprendre plusieurs couches (1) identiques ou différentes, en particulier identiques.

### S'agissant de la couche (2)

### Polyamide aliphatique à courte chaîne (A) : X₁Y₁/Z₁

La couche (2) comprend une composition comprenant au moins 50% d'au moins un polyamide semi-cristallin à courte chaîne noté (A) constitué d'au moins 70% de motifs aliphatiques.

L'expression « polyamide semi-cristallin» au sens de l'invention tout au long de la description désigne des polyamides qui présentent une température de fusion (Tf) et une enthalpie de fusion ΔH > 25 J/g, en particulier > 40 J/g, notamment > 45J/g, ainsi qu'une température de transition vitreuse (Tg) tels que déterminés par DSC selon la norme ISO 11357-1 :2016 et ISO 11357-2 et 3 :2013, à une vitesse de chauffe de 20K/min.

Dans toute la description, l'expression « constitué d'au moins 70% de motifs aliphatiques» signifie que le polyamide à courte chaîne (A) est majoritairement aliphatique, c'est-à-dire que le motif Z₁ est constitué de motif répétitif polyamide non aliphatique pouvant aller jusqu'à 30% et faisant le complément à 100% en poids dans le polyamide (A), auquel cas le polyamide à courte chaîne (A) est constitué de 70% ou plus de motifs aliphatiques.

Dans le cas où Z₁ est un motif répétitif polyamide aliphatique faisant le complément à 100% en poids dans le polyamide (A), alors le polyamide à courte chaîne (A) est totalement aliphatique et est donc constitué de 100% de motifs aliphatiques.

Il existe un cas intermédiaire ou Z₁ est constitué de motifs répétitifs aliphatiques et de motifs répétitifs non aliphatiques faisant le complément à 100% en poids dans le polyamide (A), alors le polyamide à courte chaîne (A) est constitué de plus de 70% de motifs aliphatiques.

Avantageusement, ledit polyamide semi-cristallin à courte chaîne noté (A) est constitué d'au moins 85% en poids de motifs aliphatiques.

Avantageusement, ladite composition comprend au moins 60% en poids d'au moins un polyamide à courte chaîne (A).

Avantageusement, ladite composition comprend au moins 70% en poids d'au moins un polyamide à courte chaîne (A).

Avantageusement, ladite composition comprend au moins 80% en poids d'au moins un polyamide à courte chaîne (A).

Avantageusement, ladite composition comprend au moins 90% en poids d'au moins un polyamide à courte chaîne (A).

Avantageusement, ladite composition comprend au moins 60% en poids d'un ou deux polyamides à courte chaîne (A).

Avantageusement, ladite composition comprend au moins 70% en poids d'un ou deux polyamides à courte chaîne (A).

Avantageusement, ladite composition comprend au moins 80% en poids d'un ou deux polyamides à courte chaîne (A).

Avantageusement, ladite composition comprend au moins 90% en poids d'un ou deux polyamides à courte chaîne (A).

Avantageusement, ladite composition comprend au moins 60% en poids d'un polyamide à courte chaîne (A).

Avantageusement, ladite composition comprend au moins 70% en poids d'un polyamide à courte chaîne (A).

Avantageusement, ladite composition comprend au moins 80% en poids d'un polyamide à courte chaîne (A).

Avantageusement, ladite composition comprend au moins 90% en poids d'un polyamide à courte chaîne (A).

L'expression « nombre moyen d'atome de carbone par atome d'azote » signifie dans le cas d'un homopolyamide de type PA-X₁Y₁, le nombre d'atomes de carbone par atome d'azote est la moyenne du motif X₁ et du motif Y₁.

Avantageusement, les motifs aliphatiques (A) présentent un nombre moyen d'atomes de carbone par atome d'azote de 4 à 8.

Avantageusement, les motifs aliphatiques (A) présentent un nombre moyen d'atomes de carbone par atome d'azote de 4 à 7.

Dans le cas des copolyamides, le nombre d'atome de carbone par atome d'azote se calcule selon le même principe. Le calcul est réalisé au prorata molaire des différents motifs amides.

Lorsque la diamine X₁ est une diamine aliphatique linéaire, elle peut être choisie par exemple parmi l'éthylène diamine, la propylènediamine, la butanediamine, la pentanediamine, et l'hexanediamine.

Lorsque la diamine X₁ est une diamine aliphatique ramifiée, elle peut notamment être la méthyl-2 pentanediamine, la 2-méthyl-1,8-octanediamine ou la triméthylène (2,2,4 ou 2,4,4) hexanediamine.

Le diacide carboxylique peut être choisi parmi les diacides carboxyliques aliphatiques, linéaires ou ramifiés.

Lorsque l'acide dicarboxylique Y₁ est aliphatique et linéaire, il peut être choisi parmi l'acide oxalique (2), l'acide malonique (3), l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12).

### Z₁ motif polyamide optionnel

Z₁ est au moins un motif répétitif polyamide obtenu à partir de la polycondensation d'au moins un lactame, d'au moins un acide aminocarboxylique ou d'au moins un motif répétitif X₂Y₂ obtenu à partir de la polycondensation d'au moins une diamine X₂ et d'au moins un diacide carboxylique Y₂.

Lorsque Z₁ est obtenu à partir de la polycondensation d'au moins un lactame, ledit lactame est en C₂-C₁₂, de préférence en C₆ ou en C₉-C₁₂, plus préférentiellement en C₆, C₉ ou C₁₀.

Lorsque Z₁ est obtenu à partir de la polycondensation d'au moins un acide aminocarboxylique, ledit acide aminocarboxylique est en C₂-C₁₂, de préférence en C₆ ou en C₉-C₁₂, plus préférentiellement en C₆, C₉ ou C₁₀.

Il est bien évident que lorsque Z₁ est par exemple en C₁₂ (lactame ou acide aminocarboxylique), la proportion de Z₁ dans le polyamide aliphatique à courte chaîne (A) est telle qu'elle respecte le nombre moyen d'atomes de carbone par atome d'azote noté C_{A} allant de 4 à 9,5, avantageusement de 4 à 8, en particulier de 4 à 7.

### Polyamide aliphatique à courte chaîne (A) : V/Z₁

Lorsque V est obtenu à partir de la polycondensation d'au moins un lactame, ledit lactame est en C₂-C₈, préférentiellement en C₄-C₆, notamment en C₆, soit le caprolactame.

Lorsque V est obtenu à partir de la polycondensation d'au moins un acide aminocarboxylique, ledit acide aminocarboxylique est en en C₂-C₈, préférentiellement en C₄-C₆, notamment en C₆, soit l'acide aminohexanoïque.

Z₁ est également un motif optionnel et est tel que défini pour X₁Y₁/Z₁.

Dans une variante, Z₁ est présent jusqu'à 30% en poids par rapport au poids total de (A), quelle que soit la structure X₁Y₁/Z₁ ou V/Z₁.

Dans une autre variante, Z₁ est présent jusqu'à 15% en poids par rapport au poids total de (A), quelle que soit la structure X₁Y₁/Z₁ ou V/Z₁.

Dans encore une autre variante Z₁ est présent jusqu'à 10% en poids, notamment jusqu'à 5% en poids par rapport au poids total de (A), quelle que soit la structure X₁Y₁/Z₁ ou V/Z₁.

Avantageusement, la proportion de Z₁ est égale à 0, que ce soit dans la structure X₁Y₁/Z₁ ou dans la structure V/Z₁.

La structure tubulaire peut comprendre plusieurs couches (2) identiques ou différentes, en particulier différentes.

### S'agissant du modifiant choc

Le modifiant choc est avantageusement constitué par un polymère présentant un module de flexion inférieur à 100 MPa mesuré selon la norme ISO 178 : 2010, déterminé à 23°C avec une humidité relative : RH50%, et de Tg inférieure à 0°C (mesurée selon la norme 11357-2 :2013 au niveau du point d'inflexion du thermogramme DSC), en particulier une polyoléfine. La polyoléfine du modifiant choc peut être fonctionnalisée ou non fonctionnalisée ou être un mélange d'au moins une fonctionnalisée et/ou d'au moins une non fonctionnalisée. Pour simplifier on a désigné la polyoléfine par (B) et on a décrit ci- dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle ;
- les copolymères éthylène/acétate de vinyle/anhydride maléique ou méthacrylate de glycidyle;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tous polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

### S'agissant du plastifiant :

A titre d'exemple, les plastifiants sont choisis parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool; et les esters de l'acide citrique ou de l'acide hydroxy-malonique, tel que l'oligoéthylèneoxy malonate.

On ne sortirait pas du cadre de l'invention en utilisant un mélange de plastifiants.

### S'agissant de l'additif :

Les additifs optionnellement utilisés dans les compositions de l'invention sont les additifs classiques utilisés dans les polyamides et bien connus de l'homme du métier et sont notamment décrits dans EP 2098580.

Par exemple, ils comprennent une charge antistatique choisie parmi le noir de carbone, le graphite, des fibres de carbone, des nanotubes de carbone, en particulier noir de carbone et nanotubes de carbone, un antioxydant, un stabilisant à la chaleur, un absorbeur d'UV, un stabilisant à la lumière, un lubrifiant, une charge inorganique, un agent ignifugeant, un agent nucléant et un colorant, des fibres de renfort, une cire et leurs mélanges.

A titre d'exemple, le stabilisant peut être un stabilisant UV, un stabilisant organique ou plus généralement une combinaison de stabilisants organiques, tel un antioxydant de type phénol (par exemple du type de celle de l'irganox® 245 ou 1098 ou 1010 de la société Ciba-BASF), un antioxydant de type phosphite (par exemple l'irgafos® 126 et l'irgafos® 168 de la société Ciba-BASF) et voire éventuellement d'autres stabilisants comme un HALS, ce qui signifie Hindered Amine Light Stabiliser ou stabilisant lumière de type amine encombrée (par exemple le Tinuvin® 770 de la société Ciba-BASF), un anti-UV (par exemple le Tinuvin® 312 de la société Ciba) ou un stabilisant à base de phosphore. On peut également utiliser des antioxydants de type amine tel le Naugard® 445 de la société Crompton ou encore des stabilisants polyfonctionnels tel le Nylostab® S-EED de la société Clariant.

Ce stabilisant peut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

S'agissant de la couche (1), du modifiant choc et du plastifiant, dans une première variante, la proportion de modifiant choc dans la composition de ladite couche (1) est d'au moins 10% en poids par rapport au poids total de la composition.

Dans une seconde variante, la proportion de modifiant choc dans la composition de ladite couche (1) est d'au moins 15% en poids par rapport au poids total de la composition.

Dans une troisième variante, ladite couche (1) est dépourvue de plastifiant.

Dans une quatrième variante, la proportion de modifiant choc dans la composition de ladite couche (1) est d'au moins 10% en poids par rapport au poids total de la composition et ladite couche (1) est dépourvue de plastifiant.

Dans une cinquième variante, la proportion de modifiant choc dans la composition de ladite couche (1) est d'au moins 15% en poids par rapport au poids total de la composition et ladite couche (1) est dépourvue de plastifiant.

S'agissant de la couche (2), du modifiant choc et du plastifiant, dans une première variante, la proportion de modifiant choc dans la composition de ladite couche (2) est ≤12% en poids par rapport au poids total de la composition.

Dans une seconde variante, la proportion de plastifiant dans la composition de ladite couche (2) est de 0 à 15% par rapport au poids total de la composition.

Dans une troisième variante, ladite couche (2) est dépourvue de plastifiant.

Dans une quatrième variante, la proportion de modifiant choc dans la composition de ladite couche (2) est ≤12% en poids par rapport au poids total de la composition et la proportion de plastifiant dans la composition de ladite couche (2) est de 0 à 15% par rapport au poids total de la composition.

Dans une cinquième variante, la proportion de modifiant choc dans la composition de ladite couche (2) est ≤12% en poids par rapport au poids total de la composition et ladite couche (2) est dépourvue de plastifiant.

S'agissant de la couche (1) et de la couche (2) et du modifiant choc ainsi que du plastifiant, dans une première variante, la proportion de modifiant choc dans la composition de ladite couche (1) est d'au moins 10% en poids par rapport au poids total de la composition et la proportion de modifiant choc dans la composition de ladite couche (2) est ≤12% en poids par rapport au poids total de la composition.

Dans une seconde variante, la proportion de modifiant choc dans la composition de ladite couche (1) est d'au moins 15% en poids par rapport au poids total de la composition et la proportion de modifiant choc dans la composition de ladite couche (2) est ≤12% en poids par rapport au poids total de la composition.

Avantageusement, la proportion de modifiant choc b) de la couche (1) est supérieure ou égale à 1,5 fois la proportion de modifiant choc b') de la couche (2).

Dans une troisième variante, ladite couche (1) est dépourvue de plastifiant et la proportion de plastifiant dans ladite couche (2) est de 0 à 20% en poids ladite par rapport au poids total de la composition.

Dans une quatrième variante, la proportion de plastifiant dans ladite couche (1) est de 0 à 20% en poids ladite par rapport au poids total de la composition et ladite (2) est dépourvue de plastifiant.

Dans une cinquième variante, ladite couche (1) et ladite (2) sont dépourvues de plastifiant.

Dans une sixième variante, la proportion de modifiant choc dans la composition de ladite couche (1) est d'au moins 10% en poids par rapport au poids total de la composition et la proportion de modifiant choc dans la composition de ladite couche (2) est ≤12% en poids par rapport au poids total de la composition, ladite couche (1) est dépourvue de plastifiant et la proportion de plastifiant dans ladite couche (2) est de 0 à 20% en poids ladite par rapport au poids total de la composition.

Dans une septième variante, la proportion de modifiant choc dans la composition de ladite couche (1) est d'au moins 10% en poids par rapport au poids total de la composition et la proportion de modifiant choc dans la composition de ladite couche (2) est ≤12% en poids par rapport au poids total de la composition, la proportion de plastifiant dans ladite couche (1) est de 0 à 20% en poids ladite par rapport au poids total de la composition et ladite (2) est dépourvue de plastifiant.

Dans une huitième variante, la proportion de modifiant choc dans la composition de ladite couche (1) est d'au moins 10% en poids par rapport au poids total de la composition et la proportion de modifiant choc dans la composition de ladite couche (2) est ≤12% en poids par rapport au poids total de la composition, ladite couche (1) et ladite (2) sont dépourvues de plastifiant.

Dans une neuvième variante, la proportion de modifiant choc dans la composition de ladite couche (1) est d'au moins 15% en poids par rapport au poids total de la composition et la proportion de modifiant choc dans la composition de ladite couche (2) est ≤12% en poids par rapport au poids total de la composition, ladite couche (1) est dépourvue de plastifiant et la proportion de plastifiant dans ladite couche (2) est de 0 à 20% en poids ladite par rapport au poids total de la composition.

Dans une dixième variante, la proportion de modifiant choc dans la composition de ladite couche (1) est d'au moins 15% en poids par rapport au poids total de la composition et la proportion de modifiant choc dans la composition de ladite couche (2) est ≤12% en poids par rapport au poids total de la composition, la proportion de plastifiant dans ladite couche (1) est de 0 à 20% en poids ladite par rapport au poids total de la composition et ladite (2) est dépourvue de plastifiant.

Dans une onzième variante, la proportion de modifiant choc dans la composition de ladite couche (1) est d'au moins 10% en poids par rapport au poids total de la composition et la proportion de modifiant choc dans la composition de ladite couche (2) est ≤12% en poids par rapport au poids total de la composition, ladite couche (1) et ladite (2) sont dépourvues de plastifiant.

Dans un mode de réalisation, le polyamide semi-aromatique de la couche (1) de la structure tubulaire multicouche (MLT) définie ci-dessus, présente une Tm comprise de 230°C à 285°C, notamment de 240°C à 275°C, mesurée selon la Norme ISO 11357-3 :2013.

Avantageusement, le polyamide semi-aromatique de la couche (1) de la structure tubulaire multicouche (MLT) définie ci-dessus est choisi parmi le PA 11/10T, PA 12/10T, le PA 1010/10T, le PA 1012/10T, le PA 1212/10T, le PA610/10T, le PA612/10T, le PA 11/12T, PA 12/12T, le PA 1010/12T, le PA 1012/12T, le PA 1212/12T, le PA 610/12T, le PA612/12T.

Dans un autre mode de réalisation, le polyamide semi-cristallin aliphatique à courte chaîne de la couche (2) de la structure tubulaire multicouche (MLT), définie ci-dessus, présente une Tm ≥ 200°C.

Avantageusement, le polyamide semi-cristallin aliphatique à courte chaîne de la couche (2) de la structure tubulaire multicouche (MLT), définie ci-dessus, présente une enthalpie de cristallisation ≥ 25 J/g, préférentiellement ≥ 40 J/g, en particulier ≥ 45 J/g mesurée selon la Norme ISO 11357-3 :2013.

Avantageusement, le polyamide semi-cristallin aliphatique à courte chaîne de la couche (2) de la structure tubulaire multicouche (MLT), définie ci-dessus, est choisi parmi le PA 610, PA 66, le PA 6, le PA 46, le PA 510, le PA 410, le PA 612, le PA 66/6 et le PA 6/12 avec moins de 20% de co-monomère respectivement 6T, 6I, 6 et 12.

On ne sortirait pas du cadre de l'invention si le polyamide de la couche (2) était le PA 612/6T, le PA 66/6T ou le PA 66/6I avec moins de 20% de co-monomères 6T ou 6I.

Avantageusement, le polyamide semi-cristallin aliphatique à courte chaîne de la couche (2) de la structure tubulaire multicouche (MLT), définie ci-dessus, comprend au moins un PA6, un PA66 ou un PA6/66 ou un mélange de ceux-ci et au moins un PA 6Y, Y étant un diacide carboxylique aliphatique comprenant de 9 à 14 atome de carbone, la moyenne du nombre moyen d'atomes de carbone par atome d'azote étant comprise de 4 à 9,5, notamment de 4 à 8, en particulier de 4 à 7.

Dans une variante, le polyamide semi-aromatique de la couche (1) de la structure tubulaire multicouche (MLT) définie ci-dessus, présente une Tm comprise de 230°C à 285°C, notamment de 240°C à 275°C, mesurée selon la Norme ISO 11357-3 :2013 et le polyamide semi-cristallin aliphatique à courte chaîne de la couche (2) présente une Tm ≥ 200°C.

Avantageusement, le polyamide semi-aromatique de la couche (1) de la structure tubulaire multicouche (MLT) définie ci-dessus, présente une Tm comprise de 240°C à 275°C, mesurée selon la Norme ISO 11357-3 :2013 et le polyamide semi-cristallin aliphatique à courte chaîne de la couche (2) présente une Tm ≥ 200°C.

Avantageusement, le polyamide semi-aromatique de la couche (1) de la structure tubulaire multicouche (MLT) définie ci-dessus est choisi parmi le PA 11/10T, PA 12/10T, le PA 1010/10T, le PA 1012/10T, le PA 1212/10T, le PA 610/10T, le PA11/12.T, le PA12/12.T, le PA6.12/12T, le PA12012/12T ou le PA612/10T, le PA11/12T, le PA12/12.T, le PA6.12/12T, le PA12012/12T en particulier le PA 11/10T, PA 12/10T, le PA 1010/10T, le PA 1212/10T, ou le PA 612/10T et le polyamide semi-cristallin aliphatique à courte chaîne de la couche (2) est choisi parmi le PA610, PA 66, le PA 6, le PA 46, le PA 510, le PA 410, le PA 612, le PA 66/6 et le PA 6/12 avec moins de 20% de co-monomère respectivement 6 et 12.

Plus avantageusement, le polyamide semi-aromatique de la couche (1) de la structure tubulaire multicouche (MLT) définie ci-dessus est choisi parmi le PA 11/10T, PA 12/10T, le PA 1010/10T, le PA 1212/10T, ou le PA 612/10T et le polyamide semi-cristallin aliphatique à courte chaîne de la couche (2) est choisi parmi le PA610, PA 66, le PA 6, le PA 46, le PA 510, le PA 410, le PA 612, le PA 66/6 et le PA 6/12 avec moins de 20% de co-monomère respectivement 6 et 12.

La ou les couche(s) (2) de la structure tubulaire multicouche (MLT) peut(peuvent) présenter une épaisseur supérieure ou égale à 2 fois l'épaisseur de la ou des couche(s) (1).

Lorsque plusieurs couches (2) sont présentes, elles sont adjacentes ou non les unes aux autres.

De la même manière, lorsque plusieurs couches (1) sont présentes, elles sont adjacentes ou non les unes aux autres, et notamment séparées par une ou plusieurs couche(s) (2).

Lorsque plusieurs couches (2) sont présentes, même si les couches (2) ne sont pas adjacentes les unes aux autres, l'épaisseur des couches (2) est l'addition de l'épaisseur de chaque couche (2). De la même manière, lorsque plusieurs couches (1) sont présentes, même si les couches (1) ne sont pas adjacentes les unes aux autres, l'épaisseur des couches (1) est l'addition de l'épaisseur de chaque couche (1).

Dans un mode de réalisation, la structure tubulaire multicouche (MLT) définie ci-dessus, comprend de l'extérieur vers l'intérieur au moins une couche (1) et au moins une couche (2). Les couches (1) et (2) peuvent être adjacentes ou non.

Lorsqu'une seule couche (1) et une seule couche (2) sont présentes, la couche (2) est donc en contact avec le fluide.

Lorsque les couches (1) et (2) ne sont pas adjacentes, une couche de liant peut être présente entre la couche (1) et la couche (2).

Au minimum, la structure comprenant une couche de liant est donc la suivante (structure (I)):
Couche (1)//liant//couche (2) (I)

Le liant est notamment décrit dans les brevets EP 1452307 et EP1162061, EP 1216826 et EP0428833.

D'autres couches (1) et (2) peuvent être présentes dans la structure (I) mais elles seront de toute évidence au-dessus de la couche (1) ou en dessous de la couche (2).

Avantageusement, la couche (1) et la couche (2) sont directement en contact l'une de l'autre. Les deux couches sont donc adjacentes et adhèrent l'une à l'autre sans autre couche entre les deux.

Au minima, les structures présentant une couche (1) et une couche (2) directement en contact l'une de l'autre sont donc les suivantes (structures (II) et (III)):
Couche (1)//couche (2) (II)
Couche (2)//couche (1) (III)

Avantageusement, la couche (1) est la couche externe et la couche (2) est la couche interne.

Avantageusement, la couche (1) est la couche externe et la couche (2) est la couche interne et la couche (2) est la couche en contact avec le fluide.

Lorsque les couches (1) et (2) sont adjacentes, une couche (1') peut être présente en dessous de la couche (2), la couche (1') étant telle que définie pour la couche (1).

Au minima, la structure est donc la suivante (structures (IV):
Couche (1)//couche (2)//couche (1') (IV).

Il est bien évident que d'autres couches (1) et/ou (2), ou autres, pourraient être présentes à la condition que trois couches (1)//(2)//(1') soient adjacentes.

Avantageusement, dans la structure tubulaire multicouche (MLT) (IV), la couche (1') et la couche (1) sont identiques.

Dans un mode de réalisation, ladite composition de ladite couche (2) comprend de plus, outre ledit polyamide aliphatique à courte chaîne (A), au moins un polyamide aliphatique choisi parmi:
- un polyamide noté A et un nombre moyen d'atomes de carbone par atome d'azote noté C_{A} allant de 4 à 9,5, avantageusement de 4 à 8, en particulier de 4 à 7,
- un polyamide noté B et un nombre moyen d'atomes de carbone par atome d'azote noté C_{B} compris de 7 à 10, avantageusement de 7,5 à 9,5 ou
- un polyamide noté C présentant un nombre moyen d'atomes de carbone par atome d'azote noté C_{C} compris de 9 à 18, avantageusement de 10 à 18 ;
   sous réserve que lorsque ladite couche intérieure (2) comprend au moins trois polyamides, l'un au moins desdits polyamides B ou C est exclu.

Ledit polyamide noté A peut être du même type que le polyamide semi-cristallin aliphatique à courte chaîne (A) mais en tout état de cause il est différent de ce dernier. En particulier le polyamide noté A est un polyamide aliphatique.

Avantageusement, le polyamide semi-cristallin aliphatique à courte chaîne (A) de la couche (2) est en proportion en poids supérieure à 70%, préférentiellement supérieure à 80%, par rapport à la somme des polyamides présents dans la composition de la couche (2).

Dans un autre mode de réalisation, ladite composition de ladite couche (2) comprend majoritairement :
- au moins ledit polyamide semi-cristallin aliphatique à courte chaine noté (A) constitué d'au moins 70% de motifs aliphatiques présentant un nombre moyen d'atomes de carbone par atome d'azote noté C_{A} allant de 4 à 8,5, avantageusement de 4 à 7, et le complément à 100% de motifs aliphatiques constitué d'au moins un motif noté B présentant un nombre moyen d'atomes de carbone par atome d'azote noté C_{B} allant de 7 à 10, avantageusement de 7,5 à 9,5 et d'au moins un motif noté C présentant un nombre moyen d'atomes de carbone par atome d'azote noté C_{C} allant de 9 à 18, avantageusement de 10 à 18 ;
le nombre moyen d'atomes de carbone par atome d'azote des motifs A, B et C répondant en outre à l'inéquation stricte suivante : C_{A}< C_{B}< C_{C}, et la moyenne du nombre moyen d'atomes de carbone par atome d'azote des motifs A, B et C étant 4 à 8,5, avantageusement de 4 à 7, l'enthalpie de fusion du polyamide à courte chaîne ou bien la moyenne pondérée massique des enthalpies de fusion du mélange des polyamides semi-cristallins aliphatiques à courte chaîne au sein de ladite composition étant supérieure à 25J/g (DSC),
la température de fusion du ou de chacun des polyamides étant supérieure ou égale à 200°C. Dans encore un autre mode de réalisation, ladite composition de ladite couche (2) comprend majoritairement :
- au moins ledit polyamide semi-cristallin aliphatique à courte chaine noté (A) constitué d'au moins 70% de motifs aliphatiques présentant un nombre moyen d'atomes de carbone par atome d'azote noté C_{A} allant de 4 à 8,5, avantageusement de 4 à 7, et le complément à 100% de motifs aliphatiques constitué d'au moins un motif noté B présentant un nombre moyen d'atomes de carbone par atome d'azote noté C_{B} allant de 7 à 10, avantageusement de 7,5 à 9,5 et
- au moins ledit polyamide semi-cristallin aliphatique à courte chaine noté (A) constitué d'au moins 70% de motifs aliphatiques présentant un nombre moyen d'atomes de carbone par atome d'azote noté C_{A} allant de 4 à 8,5, avantageusement de 4 à 7, et le complément à 100% de motifs aliphatiques constitué d'au moins un motif noté C présentant un nombre moyen d'atomes de carbone par atome d'azote noté C_{C} allant de 9 à 18, avantageusement de 10 à 18,
le nombre moyen d'atomes de carbone par atome d'azote des motifs A, B et C répondant en outre à l'inéquation stricte suivante : C_{A}< C_{B}< C_{C}, et la moyenne du nombre moyen d'atomes de carbone par atome d'azote des motifs A, B et C étant 4 à 8,5, avantageusement de 4 à 7, l'enthalpie de fusion du polyamide à courte chaîne ou bien la moyenne pondérée massique des enthalpies de fusion du mélange des polyamides semi-cristallins aliphatiques à courte chaîne au sein de ladite composition étant supérieure à 25J/g (DSC),
la température de fusion du ou de chacun des polyamides étant supérieure ou égale à 200°C.

Avantageusement, dans l'un ou l'autre de ces deux derniers modes de réalisation, ledit motif aliphatique représente de 80% à 97% en poids par rapport à la somme des motifs présents dans les polyamides de la composition de la couche (2).

Dans un mode de réalisation, la structure tubulaire multicouche (MLT) ci-dessus définie comprend de plus une couche barrière choisie parmi un copolymère d'éthylène et d'alcool vinylique (EVOH) et PPA.

L'expression « couche barrière » signifie que la couche est très peu perméable aux fluides transportés.

Dans un mode de réalisation, la dite couche barrière est EVOH.

Dans ce cas, elle ne peut être la couche la plus externe ou la plus interne. Avantageusement, ladite structure tubulaire multicouche (MLT) définie ci-dessus, comprend de l'extérieur vers l'intérieur (structure (V) :
couche (1)//couche (2)//EVOH//couche (2')//couche (1') (V),
la couche (1') étant telle que définie pour la couche (1), la couche (2') étant telle que définie pour la couche (2).

Dans une première variante, la couche (1') est identique à la couche (1) et la couche (2') est identique à la couche (2) :
couche (1)//couche (2)//EVOH//couche (2)//couche (1) (VI).

Dans une seconde variante, la couche (1') est identique à la couche (1) et la couche (2') est différente de la couche (2) :
couche (1)//couche (2)//EVOH//couche (2')//couche (1) (VII).

Dans une troisième variante, la couche (1') est différente de la couche (1) et la couche (2') est identique à la couche (2) :
couche (1)//couche (2)//EVOH//couche (2)//couche (1') (VIII).

Dans une quatrième variante, la couche (1') est différente de la couche (1) et la couche (2') est différente de la couche (2) :
couche (1)//couche (2)//EVOH//couche (2')//couche (1') (IX).

Dans un autre mode de réalisation, la dite couche barrière est en polyamide semi-aromatique (PPA).

Ledit polyamide semi-aromatique de la couche barrière est notamment un polyamide semi-aromatique de formule X/YAr, tel que décrits dans EP1505099, notamment un polyamide semi-aromatique de formule D/XT dans laquelle D est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18 ;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18,
notamment un polyamide de formule D/6T, D/9T, D/10T ou D/11T, D étant tel que défini ci-dessus, en particulier un polyamide PA 6/6T, 66/6T, 6I/6T, PA11/10T, 11/6T/10T, MXDT/10T ou MPMDT/10T, BACT/10T l'aramide, et les copolymères blocs, notamment polyamide/polyéther (PEBA) ou
un polyamide de formule MXDY ou PXDY dans lequel Y est un acide dicarboxylique tel que défini ci-dessus.

Avantageusement, le polyamide semi-aromatique est choisi parmi un polyamide MXD6, PXD6, MXD10, PXD10, ou un copolyamide X₂T/X'₂Ar, X₂ et X'₂ représentant chacun, indépendamment l'un de l'autre, une diamine aliphatique linéaire ou ramifiée en C₆-C₁₃, notamment le polyamide semi-aromatique est choisi parmi PA9T, PA9T/9'T, PA10T/6T, PA6T/6I, PA6T/66.
9' correspond à la méthyloctanediamine isomère de position de la nonanediamine.

Dans le cas où la couche barrière est en PPA, la structure tubulaire multicouche (MLT) définie ci-dessus, comprend avantageusement de l'extérieur vers l'intérieur :
couche (1)//couche (2)//PPA// couche (2')//couche (1'), (X)
la couche (1') étant telle que définie pour la couche (1), la couche (2') étant telle que définie pour la couche (2).

Dans une première variante, la couche (1') est identique à la couche (1) et la couche (2') est identique à la couche (2) :
couche (1)//couche (2)// PPA //couche (2)//couche (1) (XI).

Dans une seconde variante, la couche (1') est identique à la couche (1) et la couche (2') est différente de la couche (2) :
couche (1)//couche (2)// PPA //couche (2')//couche (1) (XII).

Dans une troisième variante, la couche (1') est différente de la couche (1) et la couche (2') est identique à la couche (2) :
couche (1)//couche (2)// PPA //couche (2)//couche (1') (XIII).

Dans une quatrième variante, la couche (1') est différente de la couche (1) et la couche (2') est différente de la couche (2) :
couche (1)//couche (2)// PPA //couche (2')//couche (1') (XIV).

Les structures MLT selon l'invention peuvent être obtenues par les techniques connues de l'homme du métier et notamment par extrusion.

L'invention va maintenant illustrée par des exemples mais sans être restreinte à ceux-ci.

### EXEMPLES

### Compositions de l'invention utilisée pour fabriquer les tubes :

HT = coPA 11/10T 0.7/1.1 molaire (Tm 260°C, MFI 300-5 = 2) + 30% EPR1 + 0,4% stab CuI/Kl à 1/8.
HTX = coPA 11/10T 0.7/1.1 molaire (Tm 260°C, MFI 300-5 = 2) + 18% EPR1 + 0,4% stab Cul/Kl à 1/8 + 5% PA6 (MFI 235-5 = 6) + 5% PA12 (MFI 235-5 = 6).
HT3 = coPA 11/10.T 0.7/1.1 molaire (Tm 260°C, MFI 300-5 = 2) + 36% EPR1 + 0,4% stab Cul/Kl à 1/8 + 10% plastifiant BBSA.
P11 = PA11 (MFI 235-5 = 8) + 6% EPR1 + 6% plastifiant BBSA + 0,4% stab Cul/Kl à 1/8.
P610-A = PA610 (MFI 235-5 = 4) + 10% plastifiant BBSA + 6% EPR1 + 0,4% stab Cul/Kl à 1/8 + 5% PA6 (MFI 235-5 = 6) + 5% PA12 (MFI 235-5 = 6).
PA610-B = PA610 (MFI 235-5 = 4) + 12% plastifiant BBSA + 6% EPR1 + 0,4% stab Cul/Kl à 1/8.
P66-A = PA66 (MFI 275-5 = 11) + 10% plastifiant BBSA + 6% EPR1 + 0,4% stab Cul/Kl à 1/8 + 5% PA610 (MFI 235-5 = 4) + 5% PA12 (MFI 235-5 = 6).
P66-B = PA66 (MFI 275-5 = 11) + 12% plastifiant BBSA + 6% EPR1 + 0,4% stab Cul/Kl à 1/8. Liant (Tie) = PA610 (MFI 235-5 = 4) + 10% plastifiant BBSA + 6% EPR1 + 30% PA6 (MFI 235-5 = 6) + 0,4% stab Cul/Kl à 1/8

Avec:
EPR1 désignant un copolymère d'éthylène et de propylène à caractère élastomère fonctionnalisé par un groupe réactif à fonction anhydride (à 0.5-1% en masse), de MFI 9 (à 230°C, sous) 10kg, de type Exxellor VA1801 de la société Exxon utilisé en tant que modifiant choc. Son module de flexion est de 10 MPa environ selon la norme ISO178 :2010 (mêmes conditions que ci-dessus).

Le MFI (Melt Flow index ou indice de fluidité à chaud) est mesuré selon ASTM D1238.

Stab Cu désignant un mélange de stabilisants minéraux à base d'iodure de cuivre et de potassium de type lodide P201 (société BASF), Cul et de Kl sont en proportion 1 pour 8. BBSA benzyl butyl sulfonamide plastifiant.

Tm signifiant température de fusion (deuxième chauffe d'une DSC selon la norme ISO 11357-3 :2013).

Ces compositions sont fabriquées par un classique compoundage dans une extrudeuse bivis co-rotative de type Coperion 40, à 300rpm, à 270°C ou à 300°C quand les ingrédients ont un point de fusion supérieur à 260°C).

### Tubes multicouche de l'invention :

Les tubes multicouches sont réalisés par coextrusion.

Le tubes MLT sont fabriqués sur une classique ligne d'extrusion tube multicouches comme décrit dans EP2098580 ou sur une classique ligne monocouche Maillefer 60 quand il s'agit de monocouches.

Les tubes multicouches réalisés par extrusion ci-dessus ont ensuite été évalués sur plusieurs critères :
- flexibilité ;
- choc VW-40°C ;
- éclatement à froid et à chaud 150°C;
- vieillissement thermique air/air (150°C);
- Tm est le critère retenu pour caractérisé l'aptitude à être utilisé à des températures de pointe (jusqu'à environ 20°C sous la Tm).

Les résultats et méthodes de mesures sont indiqués dans le Tableau I.

**TABLEAU I**

| Exemples de l'invention | structure (1) | Flexibilité (2) | Choc -40°C (3) | Eclat. 23°C (4) | Eclat. 150°C (4) | vieillissement, en h (5) | Tm (6), en °C |
|---|---|---|---|---|---|---|---|
| ex.1 | HT // P610-A // HT | 635 | 3% | 28 | 8,1 | 2900 | 265 // 217// 265 |
| ex.2 | HT // P66-A // HT | 640 | 3% | 26,5 | 9,5 | 2675 | 265 // 255 // 265 |
| ex.3 | HTX // P66-B // HTX | 670 | 10% | 28,5 | 10,8 | 2250 | 265 // 256 // 265 |
| ex.4 | HT (300µ) // P66-A | 650 | 25% | 26,7 | 9,4 | 1675 | 265 // 255 |
| ex. 5 | HT // P610-B // HT | 655 | 7% | 29,2 | 9,4 | 2650 | 265 // 217 // 265 |

| Contre exemples | structure (1) | Flexibilité (2) | Choc -40°C (3) | Eclat. 23°C (4) | Eclat. 150°C (4) | vieillissement, en h (5) | Tm (6), en °C |
|---|---|---|---|---|---|---|---|
| cx.1 | P610-A | 460 | 20% | 28,5 | 9,8 | 900 | 217 |
| cx.2 | P66-A | 475 | 100% | 28 | nd | 700 | 255 |
| cx.3 | P66-B | 500 | 100% | 29,5 | nd | 275 | 256 |
| cx.4 | HT | 1110 | 10% | 29 | 5,0 | 3100 | 265 |
| cx.5 | HT3 | 555 | 10% | 17 | 3,3 | 2000 | 261 |
| cx.6 | HTX | 1275 | 0% | 40 | 6,2 | 2900 | 265 |
| cx.t1 | P11//P610-A//P11 | 440 | 0% | 27,5 | 8,3 | 3200 | 189 // 217 // 189 |
| cx.t2 | HTX // P11 // HTX | nd | 0% | 32 | 6,9 | nd | 265 // 189 // 265 |

| | | | | | | | |
|---|---|---|---|---|---|---|---|
| nd : non déterminé (1) Tube 8*1mm monocouche et multicouche 8*1mm, les couches des tricouches sont répartis ainsi : 0.15mm // 0.70mm // 0.15mm (2) Module de flexion selon ISO178 :2010 déterminé à 23°C avec une humidité relative : RH50%, exprimée en MPa. (3) Choc à -40°C selon la norme VW TL-52435 §6.5, PV 3905, en % de casse. (4) Eclatement à 23°C et 150°C selon DIN 53758, en MPa. (5) Tenue au vieillissement à 150°C dans l'air, demi-vie en h (correspond à la doute où on obtient un taux de casse de 50%, avec comme critère le choc DIN53758 à -40°C. Le vieillissement dans l'air est suffisamment représentatif du vieillissement dans air (extérieur du tube) / fluide (intérieur du tube) (6) Température de fusion (selon DSC norme ISO 11357-3 :2013) en °C de la composition de la couche (monocouche) ou de la composition chaque couche (MLT). Dans le cas de tubes MLT, la plus basse d'entre elles interdit une utilisation au-delà de cette température. | | | | | | | |

## Revendications

1. Structure tubulaire multicouche (MLT) destinée au transport de fluides tels que de l'air, de l'huile, de l'eau, une solution d'urée, un liquide de refroidissement à base de glycol, un refroidisseur d'huile de transmission (TOC), ou un liquide de climatisation ou un carburant tel que de l'essence, en particulier de la bio-essence ou du diesel, en particulier bio-diesel, comprenant au moins une couche (1) et au moins une couche (2),
ladite couche (1) comprenant une composition comprenant :
- a) au moins 50% en poids d'au moins un polyamide semi-aromatique de formule W/ZT dans laquelle :
- W est un motif répétitif aliphatique choisi parmi un motif obtenu à partir de la polycondensation d'au moins un acide aminocarboxylique en C₄-C₃₆, un motif obtenu à partir de la polycondensation d'au moins un lactame en C₄-C₃₆, et un motif répétitif X.Y aliphatique obtenu à partir de la polycondensation :
- d'au moins une diamine X, ladite diamine étant choisie parmi une diamine aliphatique linéaire ou ramifiée ou un mélange de celles-ci, et
- d'au moins un diacide carboxylique Y, ledit diacide étant un diacide aliphatique,
ladite diamine et ledit diacide comprenant de 4 à 36 atomes de carbone, avantageusement de 6 à 18 atomes de carbone, notamment de 9 à 18 atomes de carbone,
la proportion molaire de W étant de 0,3 à 1,1 pour 1 mole de ZT, préférentiellement de 0,5 à 1 pour 1 mole de ZT,
- ZT est un motif répétitif obtenu à partir de la polycondensation d'au moins une diamine aliphatique linéaire ou ramifiée (Z) comprenant de 9 à 18 atomes de carbone, avantageusement de 10 à 15 atomes de carbone, avec de l'acide téréphtalique (T),
- b) au moins 10% en poids, préférentiellement au moins 15% d'un modifiant choc,
- c) de 0 à 20% en poids d'au moins un plastifiant,
- d) de 0 à 40% en poids d'au moins un additif,
la somme a) +b) + c) + d) étant égale à 100%,
ladite couche (2) comprenant une composition comprenant a') au moins 50% en poids d'au moins un polyamide semi-cristallin à courte chaîne noté (A) constitué d'au moins 70% de motifs aliphatiques et présentant un nombre moyen d'atomes de carbone par atome d'azote noté C_{A} allant de 4 à 9,5, avantageusement de 4 à 8, en particulier de 4 à 7, ledit polyamide aliphatique à courte chaîne (A) étant :
- de formule X₁Y₁/Z₁, dans laquelle :
- X₁Y₁ est un motif répétitif aliphatique obtenu à partir de la polycondensation d'au moins une diamine aliphatique X₁ linéaire ou ramifiée comprenant de 2 à 6 atomes de carbone, avantageusement de 4 à 6 atomes de carbone, en particulier comprenant 6 atomes de carbone avec au moins un diacide carboxylique aliphatique Y₁ comprenant de 2 à 12 atomes de carbone, avantageusement de 6 à 10 atomes de carbone,
- Z₁ est au moins un motif répétitif polyamide optionnel, Z₁ pouvant être présent jusqu'à 30% en poids par rapport au poids total X₁Y₁/Z₁, préférentiellement jusqu'à 15% en poids par rapport au poids total X₁Y₁/Z₁,
ou
- de formule V/Z₁, V étant un motif répétitif obtenu à partir de la polycondensation d'au moins un lactame comprenant de 2 à 8 atomes de carbone, avantageusement de 4 à 6 atomes de carbone, en particulier 6 atomes de carbone ou d'au moins un acide aminocarboxylique comprenant de 2 à 8 atomes de carbone, avantageusement de 4 à 6 atomes de carbone, en particulier 6 atomes de carbone, Z₁ étant tel que défini ci-dessus en a'),
- b') de 0 à 15% d'au moins un modifiant choc,
- c') de 0 à 12% en poids d'au moins un plastifiant,
- d') de 0 à 40% en poids d'au moins un additif,
la somme a') + b') + c') + d') étant égale à 100%.

2. Structure tubulaire multicouche (MLT) selon la revendication 1, dans laquelle le polyamide semi-aromatique de la couche (1) présente une Tm comprise de 230°C à 285°C, notamment de 240°C à 275°C, mesurée selon la Norme ISO 11357-3 : 2013.

3. Structure tubulaire multicouche (MLT) selon la revendication 1 ou 2, dans laquelle le polyamide semi-aromatique de la couche (1) est choisi parmi le PA 11/10T, PA 12/10T, le PA 1010/10T, le PA 1012/10T, le PA 1212/10T, le PA 610/10T, le PA612/10T, le PA 11/12T, PA 12/12T, le PA 1010/12T, le PA 1012/12T, le PA 1212/12T, le PA 610/12T, le PA612/12T.

4. Structure tubulaire multicouche (MLT) selon l'une des revendications 1 à 3, dans laquelle le polyamide semi-cristallin aliphatique à courte chaîne de la couche (2) est un polyamide à courte chaîne présentant une Tm ≥ 200°C.

5. Structure tubulaire multicouche (MLT) selon l'une des revendications 1 à 4, dans laquelle le polyamide semi-cristallin aliphatique à courte chaîne de la couche (2) présente une enthalpie de cristallisation ≥ 25 J/g, préférentiellement ≥ 40 J/g, en particulier ≥ 45 J/g mesurée selon la Norme ISO 11357-3 : 2013.

6. Structure tubulaire multicouche (MLT) selon l'une des revendications 1 à 5, dans laquelle le polyamide semi-cristallin aliphatique à courte chaîne de la couche (2) est choisi parmi le PA610, PA 66, le PA 6, le PA 46, le PA 510, le PA 410, le PA 612, le PA 66/6 et le PA 6/12 avec moins de 20% de co-monomère respectivement 6 et 12.

7. Structure tubulaire multicouche (MLT) selon l'une des revendications 1 à 5, dans laquelle la composition de ladite couche (2) comprend au moins un PA6, un PA66 ou un PA6/66 ou un mélange de ceux-ci et au moins un PA 6Y, Y étant un diacide carboxylique aliphatique comprenant de 9 à 14 atome de carbone, la moyenne du nombre moyen d'atomes de carbone par atome d'azote étant comprise de 4 à 9,5, notamment de 4 à 8, en particulier de 4 à 7.

8. Structure tubulaire multicouche (MLT) selon l'une des revendications 1 à 7, dans laquelle la ou les couche(s) (2) présente(nt) une épaisseur supérieure ou égale à 2 fois l'épaisseur de la ou des couche(s) (1).

9. Structure tubulaire multicouche (MLT) selon l'une des revendications 1 à 8, dans laquelle la proportion de modifiant choc b) de la couche (1) est supérieure ou égale à 1,5 fois la proportion de modifiant choc b') de la couche (2).

10. Structure tubulaire multicouche (MLT) selon la revendication 9, dans laquelle la proportion de modifiant choc b') de la couche (2) est inférieure à 12% en poids.

11. Structure tubulaire multicouche (MLT) selon l'une des revendications 1 à 10, dans laquelle la proportion de Z₁ est égale à 0.

12. Structure tubulaire multicouche (MLT) selon l'une des revendications 1 à 11, dans laquelle ladite structure comprend de l'extérieur vers l'intérieur au moins une couche (1) et au moins une couche (2).

13. Structure tubulaire multicouche (MLT) selon la revendication 12, dans laquelle une couche de liant est présente entre la couche (1) et la couche (2).

14. Structure tubulaire multicouche (MLT) selon la revendication 12, dans laquelle la couche (1) et la couche (2) sont directement en contact l'une de l'autre.

15. Structure tubulaire multicouche (MLT) selon l'une des revendications 1 à 14, dans laquelle une couche (1') est présente en dessous de la couche (2), la couche (1') étant telle que définie pour la couche (1).

16. Structure tubulaire multicouche (MLT) selon la revendication 15, dans laquelle la couche (1') et la couche (1) sont identiques.

17. Structure tubulaire multicouche (MLT) selon l'une des revendications 1 à 16, dans laquelle ladite composition de ladite couche (2) comprend de plus au moins un polyamide aliphatique choisi parmi :
- un polyamide noté A et un nombre moyen d'atomes de carbone par atome d'azote noté C_{A} allant de 4 à 9,5, avantageusement de 4 à 8, en particulier de 4 à 7,
- un polyamide noté B et un nombre moyen d'atomes de carbone par atome d'azote noté C_{B} compris de 7 à 10, avantageusement de 7,5 à 9,5,
- un polyamide noté C présentant un nombre moyen d'atomes de carbone par atome d'azote noté C_{C} compris de 9 à 18, avantageusement de 10 à 18 ;
sous réserve que lorsque ladite couche intérieure (2) comprend au moins trois polyamides, l'un au moins desdits polyamides B ou C est exclu.

18. Structure tubulaire multicouche (MLT) selon la revendication 17, dans laquelle le polyamide semi-cristallin aliphatique à courte chaîne de la couche (2) est en proportion en poids supérieure à 70%, préférentiellement supérieure à 80%, par rapport à la somme des polyamides présents dans la composition de la couche (2).

19. Structure tubulaire multicouche (MLT) selon l'une des revendications 1 à 16, dans laquelle ladite composition de ladite couche (2) comprend majoritairement :
- au moins ledit polyamide semi-cristallin aliphatique à courte chaine noté (A) constitué d'au moins 70% de motifs aliphatiques présentant un nombre moyen d'atomes de carbone par atome d'azote noté C_{A} allant de 4 à 8,5, avantageusement de 4 à 7, et le complément à 100% de motifs aliphatiques constitué d'au moins un motif noté B présentant un nombre moyen d'atomes de carbone par atome d'azote noté C_{B} allant de 7 à 10, avantageusement de 7,5 à 9,5 et d'au moins un motif noté C présentant un nombre moyen d'atomes de carbone par atome d'azote noté C_{C} allant de 9 à 18, avantageusement de 10 à 18 ;
le nombre moyen d'atomes de carbone par atome d'azote des motifs A, B et C répondant en outre à l'inéquation stricte suivante : C_{A}< C_{B}< C_{C}, et la moyenne du nombre moyen d'atomes de carbone par atome d'azote des motifs A, B et C étant 4 à 8,5, avantageusement de 4 à 7,
l'enthalpie de fusion du polyamide à courte chaîne ou bien la moyenne pondérée massique des enthalpies de fusion du mélange des polyamides semi-cristallins aliphatiques à courte chaîne au sein de ladite composition étant supérieure à 25J/g (DSC),
la température de fusion du ou de chacun des polyamides étant supérieure ou égale à 200°C.

20. Structure tubulaire multicouche (MLT) selon l'une des revendications 1 à 16, dans laquelle ladite composition de ladite couche (2) comprend majoritairement :
- au moins ledit polyamide semi-cristallin aliphatique à courte chaine noté (A) constitué d'au moins 70% de motifs aliphatiques présentant un nombre moyen d'atomes de carbone par atome d'azote noté C_{A} allant de 4 à 8,5, avantageusement de 4 à 7, et le complément à 100% de motifs aliphatiques constitué d'au moins un motif noté B présentant un nombre moyen d'atomes de carbone par atome d'azote noté C_{B} allant de 7 à 10, avantageusement de 7,5 à 9,5 et
- au moins ledit polyamide semi-cristallin aliphatique à courte chaine noté (A) constitué d'au moins 70% de motifs aliphatiques présentant un nombre moyen d'atomes de carbone par atome d'azote noté C_{A} allant de 4 à 8,5, avantageusement de 4 à 7, et le complément à 100% de motifs aliphatiques constitué d'au moins un motif noté C présentant un nombre moyen d'atomes de carbone par atome d'azote noté C_{C} allant de 9 à 18, avantageusement de 10 à 18,
le nombre moyen d'atomes de carbone par atome d'azote des motifs A, B et C répondant en outre à l'inéquation stricte suivante : C_{A}< C_{B}< C_{C}, et la moyenne du nombre moyen d'atomes de carbone par atome d'azote des motifs A, B et C étant 4 à 8,5, avantageusement de 4 à 7,
l'enthalpie de fusion du polyamide à courte chaîne ou bien la moyenne pondérée massique des enthalpies de fusion du mélange des polyamides semi-cristallins aliphatiques à courte chaîne au sein de ladite composition étant supérieure à 25J/g (DSC),
la température de fusion du ou de chacun des polyamides étant supérieure ou égale à 200°C.

21. Structure tubulaire multicouche (MLT) selon la revendication 19 ou 20, dans laquelle ledit motif aliphatique représente de 80% à 97% en poids par rapport à la somme des motifs présents dans les polyamides de la composition de la couche (2).

22. Structure tubulaire multicouche (MLT) selon l'une des revendications 1 à 21, dans laquelle une couche barrière en EVOH est de plus présente,

23. Structure tubulaire multicouche (MLT) selon la revendication 22, dans laquelle ladite structure comprend de l'extérieur vers l'intérieur :
couche (1)//couche (2)//EVOH//couche (2')//couche (1') (V),
la couche (1') étant telle que définie pour la couche (1), la couche (2') étant telle que définie pour la couche (2).

24. Structure tubulaire multicouche (MLT) selon la revendication 23, dans laquelle la couche (1') est identique à la couche (1) et la couche (2') est identique à la couche (2).

25. Structure tubulaire multicouche (MLT) selon l'une des revendications 1 à 21, dans laquelle une couche barrière en polyamide semi-aromatique (PPA) est présente.

26. Structure tubulaire multicouche (MLT) selon la revendication 25, dans laquelle le polyamide semi-aromatique est choisi parmi un polyamide MXD6, PXD6, MXD10, PXD10, ou un copolyamide X₂T/X'₂Ar, X₂ et X'₂ représentant chacun, indépendamment l'un de l'autre, une diamine aliphatique linéaire ou ramifiée en C₆-C₁₃, notamment le PA 9T, le PA 9T/9'T, le PA10T/6T, le PA6T/6I, le PA6T/66.

27. Structure tubulaire multicouche (MLT) selon la revendication 25 ou 26, dans laquelle ladite structure comprend de l'extérieur vers l'intérieur :
couche (1)//couche (2)//PPA// couche (2')//couche (1'), la couche (1') étant telle que définie pour la couche (1), la couche (2') étant telle que définie pour la couche (2).

## Patentansprüche

1. Rohrförmige Mehrschichtstruktur (MLT) für den Transport von Fluiden wie Luft, Öl, Wasser, eine Harnstofflösung, eine Kühlflüssigkeit auf Glykolbasis, Getriebeölkühlmittel (TOC) oder eine Klimaanlagenflüssigkeit oder Kraftstoff wie Benzin, insbesondere Biobenzin oder Diesel, insbesondere Biodiesel, umfassend mindestens eine Schicht (1) und mindestens eine Schicht (2),
wobei die Schicht (1) eine Zusammensetzung umfasst, die Folgendes umfasst:
- a) zu mindestens 50 Gew.-% mindestens ein semiaromatisches Polyamid der Formel W/ZT, wobei:
- W eine aliphatische Wiederholungseinheit ist, ausgewählt aus einer Einheit, die aus der Polykondensation von mindestens einer C₄-C₃₆-Aminocarbonsäure erhalten wird, einer Einheit, die aus der Polykondensation von mindestens einem C₄-C₃₆-Lactam erhalten wird, und einer aliphatischen Wiederholungseinheit X.Y, die aus der Polykondensation erhalten wird:
- von mindestens einem Diamin X, wobei das Diamin ausgewählt ist aus einem linearen oder verzweigten aliphatischen Diamin oder einer Mischung davon, und
- von mindestens einer Dicarbonsäure Y, wobei die Disäure eine aliphatische Disäure ist,
wobei das Diamin und die Disäure 4 bis 36 Kohlenstoffatome umfassen, vorteilhafterweise 6 bis 18 Kohlenstoffatome, insbesondere 9 bis 18 Kohlenstoffatome,
wobei das Molverhältnis von W 0,3 bis 1,1 pro 1 Mol ZT, vorzugsweise 0,5 bis 1 pro 1 Mol ZT beträgt,
- ZT eine Wiederholungseinheit ist, die aus der Polykondensation von mindestens einem linearen oder verzweigten aliphatischen Diamin (Z) mit 9 bis 18 Kohlenstoffatomen, vorteilhafterweise 10 bis 15 Kohlenstoffatomen, mit Terephthalsäure (T) erhalten wird,
- b) mindestens zu 10 Gew.-%, vorzugsweise mindestens 15 % einen Schlagzähigkeitsmodifizierer,
- c) zu 0 bis 20 Gew.-% mindestens einen Weichmacher,
- d) zu 0 bis 40 Gew.-% mindestens ein Additiv,
wobei die Summe von a) +b) + c) + d) gleich 100 % ist,
wobei die Schicht (2) eine Zusammensetzung umfasst, die Folgendes umfasst
a') zu mindestens 50 Gew.-% mindestens ein kurzkettiges teilkristallines Polyamid mit der Bezeichnung (A), das aus mindestens 70 % aliphatischen Einheiten mit einer durchschnittlichen Anzahl von Kohlenstoffatomen pro Stickstoffatom mit der Bezeichnung C_{A} besteht, die im Bereich von 4 bis 9,5, vorteilhafterweise von 4 bis 8, insbesondere von 4 bis 7, liegt, wobei das kurzkettige aliphatische Polyamid (A) wiedergegeben wird durch:
- die Formel X₁Y₁/Z₁, wobei:
- X₁Y₁ eine aliphatische Wiederholungseinheit ist, die aus der Polykondensation von mindestens einem linearen oder verzweigten aliphatischen Diamin X₁ erhalten wird, umfassend von 2 bis 6 Kohlenstoffatomen, vorteilhafterweise von 4 bis 6 Kohlenstoffatomen, insbesondere umfassend 6 Kohlenstoffatome mit mindestens einer aliphatischen Dicarbonsäure Y₁, umfassend von 2 bis 12 Kohlenstoffatomen, vorteilhafterweise von 6 bis 10 Kohlenstoffatome,
- Z₁ mindestens eine optionale Polyamid-Wiederholungseinheit ist, wobei Z₁ bis zu 30 Gew.-%, bezogen auf das Gesamtgewicht X₁Y₁/Z₁, vorzugsweise bis zu 15 Gew.-%, bezogen auf das Gesamtgewicht X₁Y₁/Z₁ sein kann,
oder
- die Formel V/Z₁, wobei V eine Wiederholungseinheit ist, die aus der Polykondensation von mindestens einem Lactam, umfassend von 2 bis 8 Kohlenstoffatomen, vorteilhafterweise von 4 bis 6 Kohlenstoffatomen, insbesondere 6 Kohlenstoffatomen oder mindestens einer Aminocarbonsäure, umfassend von 2 bis 8 Kohlenstoffatomen, vorteilhafterweise von 4 bis 6 Kohlenstoffatomen, insbesondere 6 Kohlenstoffatomen, erhalten wird, wobei Z₁ wie vorstehend in a') definiert ist,
- b') zu 0 bis 15 % mindestens einen Schlagzähigkeitsmodifizierer,
- c') zu 0 bis 12 Gew.-% mindestens einen Weichmacher,
- d) zu 0 bis 40 Gew.-% mindestens ein Additiv,
wobei die Summe von a') + b') + c') + d') gleich 100 % ist.

2. Rohrförmige Mehrschichtstruktur (MLT) nach Anspruch 1, wobei das semiaromatische Polyamid der Schicht (1) eine Tm von 230 °C bis 285 °C, insbesondere von 240 °C bis 275 °C, gemessen gemäß ISO-Norm 11357-3: 2013 aufweist.

3. Rohrförmige Mehrschichtstruktur (MLT) nach Anspruch 1 oder 2, wobei das semiaromatische Polyamid der Schicht (1) ausgewählt ist aus PA 11/10T, PA 12/10T, PA 1010/10T, PA 1012/10T, PA 1212/10T, PA 610/10T, PA612/10T, PA 11/12T, PA 12/12T, PA 1010/12T, PA 1012/12T, PA 1212/12T, PA 610/12T, PA612/12T.

4. Rohrförmige Mehrschichtstruktur (MLT) nach einem der Ansprüche 1 bis 3, wobei das kurzkettige aliphatische teilkristalline Polyamid der Schicht (2) ein kurzkettiges Polyamid mit einer Tm ≥ 200 °C ist.

5. Rohrförmige Mehrschichtstruktur (MLT) nach einem der Ansprüche 1 bis 4, wobei das kurzkettige aliphatische teilkristalline Polyamid der Schicht (2) eine Kristallisationsenthalpie ≥ 25 J/g, vorzugsweise ≥ 40 J/g, insbesondere ≥ 45 J/g, gemessen gemäß der ISO-Norm 11357-3: 2013 aufweist.

6. Rohrförmige Mehrschichtstruktur (MLT) nach einem der Ansprüche 1 bis 5, wobei das kurzkettige aliphatische teilkristalline Polyamid der Schicht (2) ausgewählt ist aus PA610, PA 66, PA 6, PA 46, PA 510, PA 410, PA 612, PA 66/6 und PA 6/12 mit weniger als 20 % Co-Monomer 6 bzw. 12.

7. Rohrförmige Mehrschichtstruktur (MLT) nach einem der Ansprüche 1 bis 5, wobei die Zusammensetzung der Schicht (2) mindestens ein PA6, ein PA66 oder ein PA6/66 oder eine Mischung davon und mindestens ein PA 6Y umfasst, wobei Y eine aliphatische Dicarbonsäure, umfassend von 9 bis 14 Kohlenstoffatomen ist, wobei der Mittelwert der durchschnittlichen Anzahl von Kohlenstoffatomen pro Stickstoffatom von 4 bis 9,5, insbesondere von 4 bis 8, speziell von 4 bis 7 beträgt.

8. Rohrförmige Mehrschichtstruktur (MLT) nach einem der Ansprüche 1 bis 7, wobei die Schicht(en) (2) eine Dicke aufweist (aufweisen), die größer oder gleich dem Zweifachen der Dicke der Schicht(en) (1) ist.

9. Rohrförmige Mehrschichtstruktur (MLT) nach einem der Ansprüche 1 bis 8, wobei der Anteil des Schlagzähigkeitsmodifizierers b) der Schicht (1) größer oder gleich dem 1,5-fachen des Anteils des Schlagzähigkeitsmodifizierers b') der Schicht (2) ist.

10. Rohrförmige Mehrschichtstruktur (MLT) nach Anspruch 9, wobei der Anteil des Schlagzähigkeitsmodifizierers b') der Schicht (2) weniger als 12 Gew.-% beträgt.

11. Rohrförmige Mehrschichtstruktur (MLT) nach einem der Ansprüche 1 bis 10, wobei der Anteil von Z₁ 0 ist.

12. Rohrförmige Mehrschichtstruktur (MLT) nach einem der Ansprüche 1 bis 11, wobei die Struktur von außen nach innen mindestens eine Schicht (1) und mindestens eine Schicht (2) umfasst.

13. Rohrförmige Mehrschichtstruktur (MLT) nach Anspruch 12, wobei eine Bindemittelschicht zwischen der Schicht (1) und der Schicht (2) vorhanden ist.

14. Rohrförmige Mehrschichtstruktur (MLT) nach Anspruch 12, wobei die Schicht (1) und die Schicht (2) in direktem Kontakt miteinander stehen.

15. Rohrförmige Mehrschichtstruktur (MLT) nach einem der Ansprüche 1 bis 14, wobei sich eine Schicht (1') unterhalb der Schicht (2) befindet, wobei die Schicht (1') wie für die Schicht (1) definiert ist.

16. Rohrförmige Mehrschichtstruktur (MLT) nach Anspruch 15, wobei die Schicht (1') und die Schicht (1) identisch sind.

17. Rohrförmige Mehrschichtstruktur (MLT) nach einem der Ansprüche 1 bis 16, wobei die Zusammensetzung der Schicht (2) ferner mindestens ein aliphatisches Polyamid umfasst, ausgewählt aus:
- einem Polyamid mit der Bezeichnung A und einer durchschnittlichen Anzahl von Kohlenstoffatomen pro Stickstoffatom mit der Bezeichnung C_{A} im Bereich von 4 bis 9,5, vorteilhafterweise von 4 bis 8, insbesondere von 4 bis 7,
- einem Polyamid mit der Bezeichnung B und einer durchschnittlichen Anzahl von Kohlenstoffatomen pro Stickstoffatom mit der Bezeichnung C_{B} im Bereich von 7 bis 10, vorteilhafterweise von 7,5 bis 9,5,
- einem Polyamid mit der Bezeichnung C mit einer durchschnittlichen Anzahl von Kohlenstoffatomen pro Stickstoffatom mit der Bezeichnung Cc im Bereich von 9 bis 18, vorteilhafterweise von 10 bis 18;
unter der Voraussetzung, dass, wenn die innere Schicht (2) mindestens drei Polyamide umfasst, mindestens eines der Polyamide B oder C ausgeschlossen ist.

18. Rohrförmige Mehrschichtstruktur (MLT) nach Anspruch 17, wobei das kurzkettige aliphatische teilkristalline Polyamid der Schicht (2) im Gewichtsverhältnis größer als 70 %, vorzugsweise größer als 80 %, bezogen auf die Summe der in der Zusammensetzung der Schicht (2) vorhandenen Polyamide ist.

19. Rohrförmige Mehrschichtstruktur (MLT) nach einem der Ansprüche 1 bis 16, wobei die Zusammensetzung der Schicht (2) überwiegend Folgendes umfasst:
- mindestens das kurzkettige aliphatische teilkristalline Polyamid mit der Bezeichnung (A), bestehend aus mindestens 70 % aliphatischen Einheiten mit einer durchschnittlichen Anzahl von Kohlenstoffatomen pro Stickstoffatom mit der Bezeichnung C_{A} im Bereich von 4 bis 8,5, vorteilhafterweise von 4 bis 7, und der Rest bis auf 100 % aus aliphatischen Einheiten, bestehend aus mindestens einer Einheit mit der Bezeichnung B mit einer durchschnittlichen Anzahl von Kohlenstoffatomen pro Stickstoffatom mit der Bezeichnung C_{B} im Bereich von 7 bis 10, vorteilhafterweise von 7,5 bis 9,5 und mindestens einer Einheit mit der Bezeichnung C mit einer durchschnittlichen Anzahl von Kohlenstoffatomen pro Stickstoffatom mit der Bezeichnung Cc im Bereich von 9 bis 18, vorteilhafterweise von 10 bis 18;
wobei die durchschnittliche Anzahl von Kohlenstoffatomen pro Stickstoffatom der Einheiten A, B und C auch die folgende strikte Ungleichung erfüllt: C_{A} < C_{B} < C_{C}, und wobei der Mittelwert der durchschnittlichen Anzahl von Kohlenstoffatomen pro Stickstoffatom der Einheiten A, B und C 4 bis 8,5, vorteilhafterweise 4 bis 7 beträgt,
wobei die Schmelzenthalpie des kurzkettigen Polyamids oder das Massengewichtsmittel der Schmelzenthalpien der Mischung der kurzkettigen aliphatischen teilkristallinen Polyamide innerhalb der Zusammensetzung größer als 25 J/g (DSC) ist,
wobei die Schmelztemperatur des oder jedes der Polyamide größer oder gleich 200 °C ist.

20. Rohrförmige Mehrschichtstruktur (MLT) nach einem der Ansprüche 1 bis 16, wobei die Zusammensetzung der Schicht (2) überwiegend Folgendes umfasst:
- mindestens das kurzkettige aliphatische teilkristalline Polyamid mit der Bezeichnung (A), bestehend aus mindestens 70 % aliphatischen Einheiten mit einer durchschnittlichen Anzahl von Kohlenstoffatomen pro Stickstoffatom mit der Bezeichnung C_{A} im Bereich von 4 bis 8,5, vorteilhafterweise von 4 bis 7, und der Rest bis auf 100 % aus aliphatischen Einheiten, bestehend aus mindestens einer Einheit mit der Bezeichnung B mit einer durchschnittlichen Anzahl von Kohlenstoffatomen pro Stickstoffatom mit der Bezeichnung C_{B} im Bereich von 7 bis 10, vorteilhafterweise von 7,5 bis 9,5 und
- mindestens das kurzkettige aliphatische teilkristalline Polyamid mit der Bezeichnung (A), bestehend aus mindestens 70 % aliphatischen Einheiten mit einer durchschnittlichen Anzahl von Kohlenstoffatomen pro Stickstoffatom mit der Bezeichnung C_{A} im Bereich von 4 bis 8,5, vorteilhafterweise von 4 bis 7, und der Rest bis auf 100 % aus aliphatischen Einheiten, bestehend aus mindestens einer Einheit mit der Bezeichnung C mit einer durchschnittlichen Anzahl von Kohlenstoffatomen pro Stickstoffatom mit der Bezeichnung C_{C} im Bereich von 9 bis 18, vorteilhafterweise von 10 bis 18,
wobei die durchschnittliche Anzahl von Kohlenstoffatomen pro Stickstoffatom der Einheiten A, B und C auch die folgende strikte Ungleichung erfüllt: C_{A} < C_{B} < C_{C}, und wobei der Mittelwert der durchschnittlichen Anzahl von Kohlenstoffatomen pro Stickstoffatom der Einheiten A, B und C 4 bis 8,5, vorteilhafterweise 4 bis 7 beträgt,
wobei die Schmelzenthalpie des kurzkettigen Polyamids oder das Massengewichtsmittel der Schmelzenthalpien der Mischung der kurzkettigen aliphatischen teilkristallinen Polyamide innerhalb der Zusammensetzung größer als 25 J/g (DSC) ist,
wobei die Schmelztemperatur des oder jedes der Polyamide größer oder gleich 200 °C ist.

21. Rohrförmige Mehrschichtstruktur (MLT) nach Anspruch 19 oder 20, wobei die aliphatische Einheit 80 bis 97 Gew.-%, bezogen auf die Summe der in den Polyamiden vorhandenen Einheiten, der Zusammensetzung der Schicht (2) darstellt.

22. Rohrförmige Mehrschichtstruktur (MLT) nach einem der Ansprüche 1 bis 21, wobei zusätzlich eine EVOH-Barriereschicht vorhanden ist.

23. Rohrförmige Mehrschichtstruktur (MLT) nach Anspruch 22, wobei die Struktur von außen nach innen Folgendes umfasst:
Schicht (1)//Schicht (2)//EVOH//Schicht (2')//Schicht (1') (V),
wobei die Schicht (1') wie für die Schicht (1) definiert ist, wobei die Schicht (2') wie für die Schicht (2) definiert ist.

24. Rohrförmige Mehrschichtstruktur (MLT) nach Anspruch 23, wobei die Schicht (1') mit der Schicht (1) identisch ist und die Schicht (2') mit der Schicht (2) identisch ist.

25. Rohrförmige Mehrschichtstruktur (MLT) nach einem der Ansprüche 1 bis 21, wobei eine Barriereschicht aus semiaromatischem Polyamid (PPA) vorhanden ist.

26. Rohrförmige Mehrschichtstruktur Struktur (MLT) nach Anspruch 25, wobei das semiaromatische Polyamid ausgewählt ist aus einem Polyamid MXD6, PXD6, MXD10, PXD10 oder einem Co-Polyamid X₂T/X'₂Ar, X₂ und X'₂, die jeweils unabhängig voneinander ein lineares oder verzweigtes aliphatisches C₆-C₁₃-Diamin, insbesondere PA 9T, PA 9T/9T, PA10T/6T, PA6T/6I, PA6T/66, darstellen.

27. Rohrförmige Mehrschichtstruktur (MLT) nach Anspruch 25 oder 26, wobei die Struktur von außen nach innen Folgendes umfasst:
Schicht (1)//Schicht (2)//PPA//Schicht (2')//Schicht (1'), wobei die Schicht (1') wie für die Schicht (1) definiert ist und die Schicht (2') wie für die Schicht (2) definiert ist.

## Claims

1. A multilayer tubular (MLT) structure intended to transport fluids such as air, oil, water, urea solution, glycol-based cooling solution, transmission oil coolant (TOC), or an air-conditioning fluid or a fuel such as gasoline, in particular bio-gasoline or diesel, in particular bio-diesel, comprising a least one layer (1) and at least one layer (2),
said layer (1) comprising a composition comprising:
- a) at least 50% by weight of at least one semi-aromatic polyamide of formula W/ZT wherein:
- W is a repeating aliphatic unit selected from a unit obtained from the polycondensation of at least one C₄-C₃₆ aminocarboxylic acid, a unit obtained from the polycondensation of at least one C₄-C₃₆ lactam, and an aliphatic repeating unit X.Y obtained from the polycondensation:
- of at least one diamine X, said diamine being selected from a linear or branched aliphatic diamine or a mixture thereof, and
- at least one dicarboxylic acid Y, said diacid being an aliphatic diacid, said diamine and said diacid comprising from 4 to 36 carbon atoms, advantageously from 6 to 18 carbon atoms, notably from 9 to 18 carbon atoms,
the molar proportion of W being from 0.3 to 1.1 for 1 mole of ZT, preferably from 0.5 to 1 for 1 mole of ZT,
- ZT is a repeating unit obtained from the polycondensation of at least one linear or branched aliphatic diamine (Z) comprising from 9 to 18 carbon atoms, advantageously from 10 to 15 carbon atoms, with terephthalic acid (T),
- b) at least 10% by weight, preferably at least 15%, of an impact modifier,
- c) from 0 to 20% by weight of at least one plasticizer,
- d) from 0 to 40% by weight of at least one additive,
the sum a) + b) + c) + d) being equal to 100%,
said layer (2) comprising a composition comprising:
a') at least 50% by weight of at least one semi-crystalline short-chain polyamide denoted (A) constituted of at least 70% aliphatic units and having an average number of carbon atoms per nitrogen atom denoted C_{A} ranging from 4 to 9.5, advantageously from 4 to 8, in particular from 4 to 7, said short-chain aliphatic polyamide (A) being:
- of formula X₁Y₁/Z₁, wherein:
- X₁Y₁ is a repeating aliphatic unit obtained from the polycondensation of at least one linear or branched aliphatic diamine X₁ comprising from 2 to 6 carbon atoms, advantageously from 4 to 6 carbon atoms, in particular comprising 6 carbon atoms with at least one aliphatic dicarboxylic acid Y₁ comprising from 2 to 12 carbon atoms, advantageously from 6 to 10 carbon atoms,
- Z₁ is at least one optional polyamide repeating unit, Z₁ may be present at up to 30% by weight relative to the total weight X₁Y₁/Z₁, preferably up to 15% by weight relative to the total weight X₁Y₁/Z₁,
or
- of formula V/Z₁, V being a repeating unit obtained from the polycondensation of at least one lactam comprising from 2 to 8 carbon atoms, advantageously from 4 to 6 carbon atoms, in particular 6 carbon atoms or at least one aminocarboxylic acid comprising from 2 to 8 carbon atoms, advantageously from 4 to 6 carbon atoms, in particular 6 carbon atoms, Z₁ being as defined above in a'),
- b') from 0 to 15% of at least one impact modifier,
- c') from 0 to 12% by weight of at least one plasticizer,
- d') from 0 to 40% by weight of at least one additive,
the sum a') + b') + c') + d') being equal to 100%.

2. The multilayer tubular structure (MLT) according to claim 1, wherein the semi-aromatic polyamide of layer (1) has a Tm of between 230°C and 285°C, notably from 240°C to 275°C, measured according to ISO standard 11357-3: 2013.

3. The multilayer tubular structure (MLT) according to claim 1 or 2, wherein the semi-aromatic polyamide of layer (1) is selected from among PA11/10T, PA12/10T, PA1010/10T, PA1012/10T, PA1212/10T, PA610/10T, PA612/10T, PA11/12T, PA 12/12T, PA 1010/12T, PA1012/12T, PA1212/12T, PA610/12T, PA612/12T.

4. The multilayer tubular structure (MLT) according to one of claims 1 to 3, wherein the semi-crystalline short-chain aliphatic polyamide of layer (2) is a short-chain polyamide having a Tm ≥ 200°C.

5. The multilayer tubular structure (MLT) according to one of claims 1 to 4, wherein the semi-crystalline short-chain aliphatic polyamide of layer (2) has a crystallization enthalpy ≥ 25 J/g, preferably ≥ 40 J/g, in particular ≥ 45 J/g measured according to ISO standard 11357-3: 2013.

6. The multilayer tubular structure (MLT) according to one of claims 1 to 5, wherein the semi-crystalline short-chain aliphatic polyamide of layer (2) is selected from among PA610, PA66, PA6, PA46, PA510, PA410, PA612, PA66/6 and PA6/12 with less than 20% of co-monomer 6 and 12 respectively.

7. The multilayer tubular structure (MLT) according to one of claims 1 to 5, wherein the composition of said layer (2) comprises at least one PA 6, PA 66 or PA 6/66 or a mixture thereof and at least one PA 6Y, Y being an aliphatic dicarboxylic acid comprising from 9 to 14 carbon atoms, the average number of carbon atoms per nitrogen atom being from 4 to 9.5, notably from 4 to 8, in particular from 4 to 7.

8. The multilayer tubular structure (MLT) according to one of claims 1 to 7, wherein the layer(s) (2) has/have a thickness greater than or equal to 2 times the thickness of the layer(s) (1).

9. The multilayer tubular structure (MLT) according to one of claims 1 to 8, wherein the proportion of impact modifier b) of layer (1) is greater than or equal to 1.5 times the proportion of impact modifier b') of layer (2).

10. The multilayer tubular structure (MLT) according to claim 9, wherein the proportion of impact modifier b') of layer (2) is less than 12% by weight.

11. The multilayer tubular structure (MLT) according to one of claims 1 to 10, wherein the proportion of Z₁ is equal to 0.

12. The multilayer tubular structure (MLT) according to one of claims 1 to 11, wherein said structure comprises from the exterior to the interior at least one layer (1) and at least one layer (2).

13. The multilayer tubular structure (MLT) according to claim 12, wherein a layer of binder is present between the layer (1) and the layer (2).

14. The multilayer tubular structure (MLT) according to claim 12, wherein the layer (1) and layer (2) are directly in contact with each other.

15. The multilayer tubular structure (MLT) according to one of claims 1 to 14, wherein a layer (1') is present below the layer (2), the layer (1') being as defined for layer (1).

16. The multilayer tubular structure (MLT) according to claim 15, wherein layer (1') and layer (1) are identical.

17. The multilayer tubular structure (MLT) according to one of claims 1 to 16, wherein said composition of said layer (2) further comprises at least one aliphatic polyamide selected from:
- one polyamide denoted A and an average number of carbon atoms per nitrogen atom denoted C_{A} ranging from 4 to 9.5, advantageously from 4 to 8, in particular from 4 to 7,
- one polyamide denoted B and an average number of carbon atoms per nitrogen atom denoted C_{B} of between 7 to 10, advantageously from 7.5 to 9.5,
- one polyamide denoted C having an average number of carbon atoms per nitrogen atom denoted Cc of between 9 to 18, advantageously from 10 to 18;
on condition that when said interior layer (2) comprises at least three polyamides, at least one of said polyamides B or C is excluded.

18. The multilayer tubular structure (MLT) according to claim 17, wherein the semi-crystalline short-chain aliphatic polyamide of layer (2) is in proportion by weight greater than 70%, preferably greater than 80%, relative to the sum of the polyamides present in the composition of layer (2).

19. The multilayer tubular structure (MLT) according to one of claims 1 to 16, wherein said composition of said layer (2) mainly comprises:
- at least said semi-crystalline short-chain aliphatic polyamide denoted (A) constituted by at least 70% of aliphatic units having an average number of carbon atoms per nitrogen atom denoted C_{A} ranging from 4 to 8.5, advantageously from 4 to 7, and the remainder to 100% of aliphatic units constituted of at least one unit denoted B having an average number of carbon atoms per nitrogen atom denoted C_{B} ranging from 7 to 10, advantageously from 7.5 to 9.5 and of at least one unit denoted C having an average number of carbon atoms per nitrogen atom denoted C_{C} ranging from 9 to 18, advantageously from 10 to 18;
the average number of carbon atoms per nitrogen atom in units A, B and C further satisfying the following strict inequation: C_{A} < C_{B} < C_{C}, and the average of the average number of carbon atoms per nitrogen atom in units A, B and C being 4 to 8.5, advantageously from 4 to 7,
the enthalpy of fusion of the short-chain polyamide or the mass-weighted average of the enthalpies of fusion of the mixture of semi-crystalline short-chain aliphatic polyamides within said composition being greater than 25 J/g (DSC),
the melting temperature of the polyamide or of each of the polyamides being greater than or equal to 200°C.

20. The multilayer tubular structure (MLT) according to one of claims 1 to 16, wherein said composition of said layer (2) mainly comprises:
- at least said semi-crystalline short-chain aliphatic polyamide denoted (A) constituted by at least 70% of aliphatic units having an average number of carbon atoms per nitrogen atom denoted C_{A} ranging from 4 to 8.5, advantageously from 4 to 7, and the remainder to 100% of aliphatic units constituted of at least one unit denoted B having an average number of carbon atoms per nitrogen atom denoted C_{B} ranging from 7 to 10, advantageously from 7.5 to 9.5 and
- at least said semi-crystalline short-chain aliphatic polyamide denoted (A) constituted by at least 70% of aliphatic units having an average number of carbon atoms per nitrogen atom denoted C_{A} ranging from 4 to 8.5, advantageously from 4 to 7, and the remainder to 100% of aliphatic units constituted of at least one unit denoted C having an average number of carbon atoms per nitrogen atom denoted C_{C} ranging from 9 to 18, advantageously from 10 to 18,
the average number of carbon atoms per nitrogen atom in units A, B and C further satisfying the following strict inequation: C_{A} < C_{B} < C_{C}, and the average of the average number of carbon atoms per nitrogen atom in units A, B and C being 4 to 8.5, advantageously from 4 to 7,
the enthalpy of fusion of the short-chain polyamide or the mass-weighted average of the enthalpies of fusion of the mixture of semi-crystalline short-chain aliphatic polyamides within said composition being greater than 25 J/g (DSC),
the melting temperature of the polyamide or of each of the polyamides being greater than or equal to 200°C.

21. The multilayer tubular structure (MLT) according to claim 19 or 20, wherein said aliphatic unit represents from 80% to 97% by weight relative to the sum of the units present in the polyamides of the composition of layer (2).

22. The multilayer tubular structure (MLT) according to one of claims 1 to 21, wherein an EVOH barrier layer is also present,

23. The multilayer tubular structure (MLT) according to claim 22, wherein said structure comprises from the outside to the inside:
layer (1)//layer (2)//EVOH//layer (2')//layer (1') (V),
layer (1') being as defined for layer (1), layer (2') being as defined for layer (2).

24. The multilayer tubular structure (MLT) according to claim 23, wherein layer (1') and layer (1) are identical and layer (2') and layer (2) are identical.

25. The multilayer tubular structure (MLT) according to one of claims 1 to 21, wherein a semi-aromatic polyamide (PPA) barrier layer is present.

26. The multilayer tubular structure (MLT) according to claim 25, wherein the semi-aromatic polyamide is selected from a polyamide MXD6, PXD6, MXD10, PXD10, or a copolyamide X₂T/X'₂Ar, X₂ and X'₂ each representing, independently of each other, a linear or branched C₆-C₁₃ aliphatic diamine, notably PA9T, PA9T/9'T, PA10T/6T, PA6T/6I, PA6T/66.

27. The multilayer tubular structure (MLT) according to claim 25 or 26, wherein said structure comprises from the outside to the inside:
layer (1)//layer (2)//PPA//layer (2')//layer (1'), layer (1') being as defined for layer (1), layer (2') being as defined for layer (2).
